# EUROPEAN PATENT SPECIFICATION

(11) **EP 2 334 551 B1**
(45) Date of publication and mention of the grant of the patent: **20.11.2013**
(21) Application number: 09763989.2
(22) Date of filing: 01.10.2009
(51) Int. Cl.: B64D 11/06

(54) **AIRCRAFT SEAT WITH EXTENDABLE TABLE**
FLUGZEUGSITZ
SIEGE D AVION

(30) Priority: 03.10.2008 GB 0818123
(43) Date of publication of application: 22.06.2011
(73) Proprietor: Zodiac Seats UK Limited, Cwmbran NP44 3HQ (GB)
(72) Inventor: MCKEEVER, John, David, Henry, London SE1 4YJ (GB)
(74) Representative: Teesdale, Emily Catherine
(86) International application number: PCT/GB2009/002334
(87) International publication number: WO 2010/038022

(56) References cited:
- DE-A1-102005 035 752
- GB-A- 2 438 162
- US-A1- 2005 012 375
- US-A1- 2007 246 981

## Description

The present invention relates to an aircraft seat, in particular but not exclusively an aircraft seat convertible to a bed.

Aircraft seats are normally provided with a table deployable for use, and which is typically stored in the back of the seat in front in the case of economy class seats. Various arrangements are used for business class seats.

Business class seats are usually arranged obliquely to aisles along which they are arrayed. They can face inwards, i.e. with the foot end of the seat when deployed as a bed, spaced further from the aisle than the head end of the bed, or outwards

DE 10 2005 035 752, which is considered to be the closest prior art and discloses all the features of the preamble of claim 1, discloses a first class aircraft accommodation compartments designed to give passengers increased privacy, for example, in order to change their clothes for sleeping. It does this by using two angled wall segments and an outer wall. The first and second wall segments coincide and are arranged in a longitudinal direction spaced from each other. An opening for an access door is formed between them.

The object of the present invention is to provide an improved table arrangement for an inwards facing aircraft seat.

According to the invention there is provided an aircraft seat having:
- a seat cushion and a back rest, together adapted to be arranged obliquely with respect to a central axis of an aircraft cabin,
- a divider for dividing the seat from another such seat in a line of the seats along the cabin, the divider extending at least beside the seat cushion,
   - the divider having a turned-in end opposite from the back-rest, the end being adapted to abut an aircraft cabin sidewall or to be contiguous with the divider of another such seat in a row of two such seats;
- ancillary furniture arranged adjoining at least the turned-in end of the divider, the ancillary furniture including:
   - a generally triangular portion abutting the sidewall or another such triangular portion and
   - a table pivoted at the corner of the triangular portion away from the sidewall or other triangular portion, the table extending above the triangular portion of the ancillary furniture when not deployed with an inner edge at least substantially parallel to the sidewall or the central axis,
the arrangement being such that the table can be pivoted away from the triangular portion to extend across in front of a user seated in the seat, wherein the table includes a table extension hinged to the inner edge of the table to overlay a portion of the table when not deployed, the arrangement being such that the table extension can be pivoted about its hinge to extend the table. Normally, the triangular portion of the ancillary furniture will be integral with the divider.

The preferred embodiment includes an ottoman for a seat behind on the opposite side of the in-turned end of the divider from the triangular portion.

To help understanding of the invention, a specific embodiment thereof will now be described by way of example and with reference to the accompanying drawings, in which:

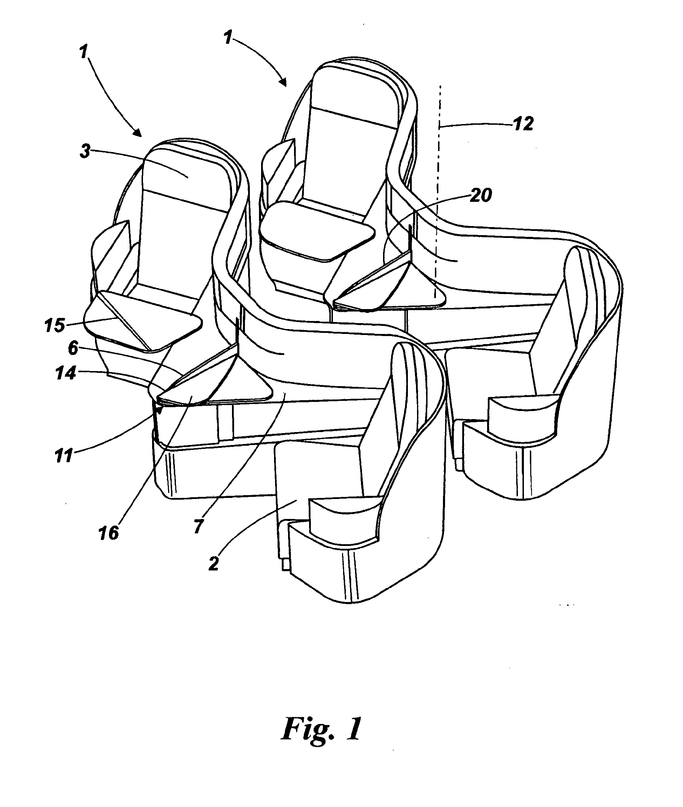

Figure 1 is a perspective view from one side of two pairs of seats according to the invention and

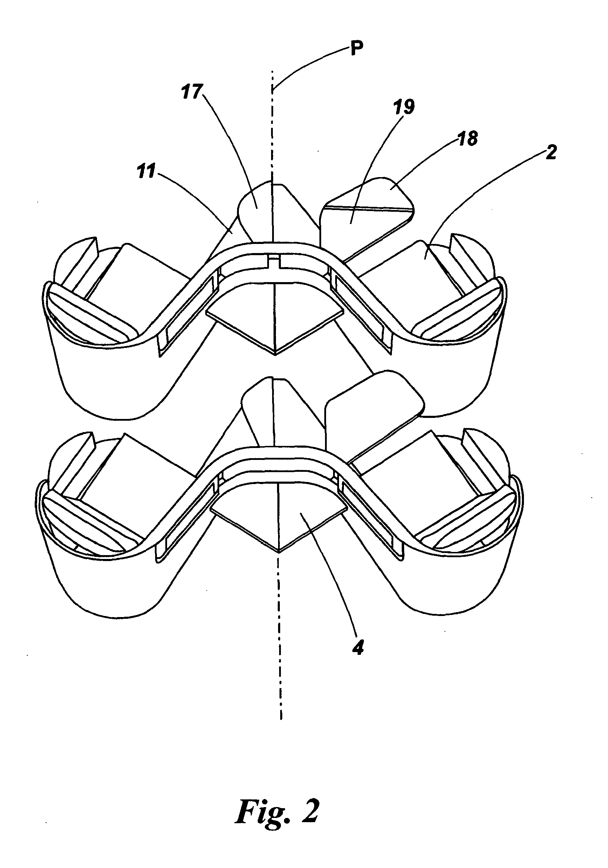

Figure 2 is a view from behind of the seats of Figure 1.

Referring to the drawings, two pairs of the seats 1 of the invention are shown. They are arranged to face inwards on either side of a central plane P. Each seat has a seat cushion 2, a back rest 3 and a foot stool or ottoman 4. The latter is for use when the seat is converted from the seat mode shown to a non-shown bed mode. A divider 5 extends behind the back rest of each seat. It curves forwards and in towards the central plane, where it divides the foot rest of a seat behind from a triangular piece 6 of ancillary furniture extending along the plane P towards its seat's foot rest. The triangular piece of ancillary furniture has an extension 7 back alongside the seat cushion.

A table 11 is arranged above the triangular furniture piece, being pivoted to it about an upwards extending axis 12 positioned at the corner of the triangle closest to the seat cushion in its seat mode. Normally the table overlies the triangular furniture piece. Its inner edge 14 is parallel to the plane P. Here a hinge 15 is provided to a table extension 16. In the normal position of the table as shown in the Figures in connection with the left hand seats, the extension provides a cocktail table surface 17. This itself is triangular, though of a different shape to the main portion 11 of the table.

For dining use, the table is swung about its pivot axis 12 to extend across in front of the seat cushion. The extension is hinged to present a surface 18 co-extensive the surface 19 of the main table portion. The cocktail surface 17 becomes the underside of extension. The hinge is adapted to hold the surfaces 18, 19 parallel in a manner that will be known to the skilled man.

A low divider 20 is provided upstanding from the triangular furniture pieces 6 of the respective seats at the central plane, dividing the cocktail surfaces 17 of the respective tables.

## Claims

1. An aircraft seat (1) having:
• a seat cushion (2) and a back rest (3), together adapted to be arranged obliquely with respect to a central axis of an aircraft cabin,
• a divider (5) for dividing the seat from another such seat in a line of the seats along the cabin, the divider extending at least beside the seat cushion,
• the divider having a turned-in end opposite from the back-rest, the end being adapted to abut an aircraft cabin sidewall or to be contiguous with the divider of another such seat in a row of two such seats;
• ancillary furniture (6) arranged adjoining at least the turned-in end of the divider, the ancillary furniture including:
• a generally triangular portion abutting the sidewall or another such triangular portion and
• a table (11) pivoted at the corner of the triangular portion away from the sidewall or other triangular portion, the table extending above the triangular portion of the ancillary furniture when not deployed with an inner edge at least substantially parallel to the sidewall or the central axis, **characterized in**
the arrangement being such that the table can be pivoted away from the triangular portion to extend across in front of a user seated in the seat, wherein the table includes a table extension (16) hinged to the inner edge of the table (11) to overlay a portion of the table when not deployed, the arrangement being such that the table extension can be pivoted about its hinge (15) to extend the table.

2. An aircraft seat as claimed in claim 1, wherein the triangular portion of the ancillary furniture (6) is integral with the divider (5).

3. An aircraft seat as claimed in claim 2, including an ottoman (4) for a seat behind on the opposite side of the in-turned end of the divider (5) from the triangular portion.

4. An aircraft seat as claimed in claim 2 or claim 3, wherein the triangular piece of ancillary furniture (6) has an extension (7) back alongside the seat cushion (2).

5. An aircraft seat as claimed in any preceding claim, including a low divider (20) upstanding from the triangular furniture portions two such seats in a row their respective tables.

## Patentansprüche

1. Flugzeugsitz (1) mit:
- einem Sitzpolster (2) und einer Rückenlehne (3), die zusammen so ausgebildet sind, dass sie bezüglich einer Mittelachse einer Flugzeugkabine schräg angeordnet sind,
- einer Trennvorrichtung (5) zum Trennen des Sitzes von einem weiteren solchen Sitz in einer Reihe von Sitzen, die sich entlang der Kabine erstreckt, wobei sich die Trennvorrichtung wenigstens neben dem Sitzpolster erstreckt, wobei
- die Trennvorrichtung gegenüber der Rückenlehne ein nach innen gedrehtes Ende hat, das dafür ausgebildet ist, an einer Flugzeugkabinenseitenwand anzuliegen oder zusammenhängend mit einer Trennvorrichtung eines weiteren solchen Sitzes in einer Reihe von zwei solchen Sitzen angeordnet zu sein;
- Zusatzausstattung (6), die so angeordnet ist, dass sie wenigstens an das nach innen gedrehte Ende der Trennvorrichtung angrenzt, wobei die Zusatzausstattung umfasst:
- einen im Allgemeinen dreieckigen Bereich, der an der Seitenwand oder an einem weiteren solchen dreieckigen Bereich anliegt, und
- einen Tisch (11), der an derjenigen Ecke des dreieckigen Bereichs, die von der Seitenwand oder dem weiteren dreieckigen Bereich entfernt ist, schwenkbar ist, wobei sich der Tisch über dem dreieckigen Bereich der Zusatzausstattung erstreckt, wenn er nicht verwendet wird, wobei eine Innenkante des Tisches sich wenigstens im Wesentlichen parallel zu der Seitenwand oder der Mittelachse erstreckt,
**dadurch gekennzeichnet, dass**
die Anordnung so gestaltet ist, dass der Tisch von dem Dreiecksbereich weggeschwenkt werden kann, um sich quer vor einem in dem Sitz sitzenden Nutzer zu erstrecken, wobei der Tisch eine Tischerweiterung (16) aufweist, die klappbar an der Innenkante des Tisches (11) befestigt ist, um mit einem Bereich des Tisches zu überlappen, wenn er nicht verwendet wird, wobei die Anordnung so gestaltet ist, dass die Tischerweiterung um ihr Scharnier (15) geklappt werden kann, um den Tisch zu erweitern.

2. Flugzeugsitz nach Anspruch 1, wobei der dreieckige Bereich der Zusatzausstattung (6) in die Trennvorrichtung (5) integriert ist.

3. Flugzeugsitz nach Anspruch 2, aufweisend eine Fußablage (4) für einen Sitz dahinter, die auf der dem dreieckigen Bereich entgegengesetzten Seite des nach innen gedrehten Endes der Trennvorrichtung (5) angeordnet ist.

4. Flugzeugsitz nach Anspruch 2 oder Anspruch 3, wobei das dreieckige Stück Zusatzausstattung (6) eine Erweiterung (7) hat, die sich entlang des Sitzpolsters (2) nach hinten erstreckt.

5. Flugzeugsitz nach einem der vorhergehenden Ansprüche, aufweisend eine niedrige Trennvorrichtung (20), die von den dreieckigen Ausstattungsbereichen hervorsteht, so dass zwei solche Sitze in einer Reihe jeweils einen eigenen Tisch haben.

## Revendications

1. Siège d'aéronef (1) présentant :
- un coussin de siège (2) et un dossier (3), adaptés ensemble pour être agencés de manière oblique par rapport à un axe central d'une cabine d'aéronef;
- une cloison (5) pour séparer le siège d'un tel autre siège dans une ligne de sièges le long de la cabine, la cloison se déployant au moins près du coussin de siège ;
- la cloison présentant une extrémité tournée vers l'intérieur opposée au dossier, l'extrémité étant adaptée pour venir en butée contre une paroi latérale de la cabine d'aéronef, ou pour être contigüe à la cloison d'un autre tel siège dans une rangée de deux tels sièges ;
- un ameublement auxiliaire (6) disposé contigu au moins à l'extrémité tournée vers l'intérieur de la cloison, l'ameublement auxiliaire comprenant :
- une partie généralement triangulaire venant en butée contre la paroi latérale ou une autre telle partie triangulaire ; et
- une table (11) articulée au niveau du coin de la partie triangulaire en s'éloignant de la paroi latérale ou d'une autre partie triangulaire, la table se déployant au-dessus de la partie triangulaire de l'ameublement auxiliaire quand elle n'est pas déployée, un bord intérieur étant au moins sensiblement parallèle à la paroi latérale ou à l'axe central, **caractérisé en ce que** :
l'agencement est tel que la table peut pivoter en s'éloignant de la partie triangulaire pour se déployer devant un utilisateur assis sur le siège, dans lequel la table comprend une extension de table (16) articulée par rapport au bord intérieur de la table (11) pour recouvrir une partie de la table quand elle n'est pas déployée, l'agencement étant tel que l'extension de table peut pivoter autour de sa charnière (15) pour agrandir la table.

2. Siège d'aéronef selon la revendication 1, dans lequel la partie triangulaire de l'ameublement auxiliaire (6) est d'une pièce avec la cloison (5).

3. Siège d'aéronef selon la revendication 2, comprenant une ottomane (4) pour un siège derrière sur le côté opposé de l'extrémité tournée vers l'intérieur de la cloison (5) à partir de la partie triangulaire.

4. Siège d'aéronef selon la revendication 2 ou la revendication 3, dans lequel le morceau triangulaire d'ameublement auxiliaire (6) présente une extension (7) derrière à côté du coussin de siège (2).

5. Siège d'aéronef selon l'une quelconque des revendications précédentes, comprenant une cloison basse (20) se levant droite à partir des parties d'ameublement triangulaire de deux tels sièges dans une rangée de leurs tables respectives.
